# EUROPEAN PATENT SPECIFICATION

(11) **EP 3 432 536 B1**
(45) Date of publication and mention of the grant of the patent: **18.11.2020**
(21) Application number: 17181877.6
(22) Date of filing: 18.07.2017
(51) Int. Cl.: H04L 29/06, H04W 4/00, H04L 29/08

(54) **COMMUNICATION DEVICE FOR COMMUNICATING DATA VIA A FIRST COMMUNICATION NETWORK WITH A SECOND COMMUNICATION NETWORK USING A CRYPTOGRAPHIC TOKEN**
KOMMUNIKATIONSVORRICHTUNG ZUR KOMMUNIKATION VON DATEN ÜBER EIN ERSTES KOMMUNIKATIONSNETZWERK AN EIN ZWEITES KOMMUNIKATIONSNETZWERK MIT EINEM KRYPTOGRAPHISCHEN TOKEN
DISPOSITIF DE COMMUNICATION PERMETTANT DE COMMUNIQUER DES DONNÉES VIA UN PREMIER RÉSEAU DE COMMUNICATION AVEC UN SECOND RÉSEAU DE COMMUNICATIONAUXMOYEN D'UN JETON CRYPTOGRAPHIQUE

(43) Date of publication of application: 23.01.2019
(73) Proprietor: Deutsche Telekom AG, 53113 Bonn (DE); Giesecke+Devrient Mobile Security GmbH, 81677 München (DE)
(72) Inventor: SCHNIEDERS, Dominik, 52078 Aachen (DE); SPITZ, Stephan, 85757 Karlsfeld (DE)
(74) Representative: Braun-Dullaeus Pannen Emmerling Patent- & Rechtsanwaltspartnerschaft mbB

(56) References cited:
- WO-A1-2017/118950
- GB-A- 2 427 519
- US-A1- 2008 008 168
- Anonymous: "IPsec Protection Mechanisms - Oracle Solaris Administration: IP Services", , 31 March 2013 (2013-03-31), XP055647741, Retrieved from the Internet: URL:https://docs.oracle.com/cd/E26505_01/h tml/E27061/ipsec-ov-7.html [retrieved on 2019-11-29]

## Description

### TECHNICAL FIELD

In general, the invention relates to wireless communication networks. More specifically, the invention relates to communication devices, methods and systems for communicating data via a first communication network with a second communication network, in particular wireless communication networks based on Low-Power Wide-Area (LPWA) technology, in particular narrowband loT communication networks.

### BACKGROUND

Today's mobile communication networks of mobile operators are usually homogeneous and are characterized by a star architecture with terminals and base stations. The disadvantage is that only the available network of a network provider or, in the case of roaming agreements, the same kind of other network providers can be used. If there is no network coverage through the defined network, the device cannot communicate. This is a problem for the manufacturers of the terminals, especially in the case of static terminals, as is frequently the case with loT, since the terminal can never establish a communication at the same location. Examples of problems with non-existent coverage can be both "outdoor" regions that are not broadcast via the infrastructure, as well as "indoor" areas, which are no longer reached by the existing base stations due to the structural damping of the buildings. However, in buildings other networks such as e.g. WiFi, etc. may be available. "Outdoor" other networks such as LPWA networks, etc. may be available.

Hence, there is a need to improve the coverage of communication terminals, in particular by enabling utilization of heterogeneous networks such as wireless/mobile and/or wired/fixed networks, in particular wireless communication networks based on LPWA technology, in particular narrowband loT networks. Relevant background art can be found in GB2427519 and US 2008/008168.

### SUMMARY OF THE INVENTION

It is an object of the invention to provide a solution for improving the coverage of communication terminals for wireless communication networks, in particular wireless communication networks based on LPWA technology, in particular narrowband IOT networks.

The foregoing and other objects are achieved by the subject matter of the independent claims. The invention is defined by the appended claims. Further implementation forms are apparent from the dependent claims, the description and the figures.

The use of a network is usually legitimated by an authentication. In the following, an efficient and comprehensive authentication process for heterogeneous networks is presented.

Embodiments of the present invention relate to communication devices that use NB loT technology. Narrowband loT (NB loT) is a new technology standard, designed to broaden the future of loT connectivity. Ratified by the 3GPP, NB loT is starting to being deployed by mobile network operators across the globe. NB loT is a Low-Power Wide-Area (LPWA) network technology, developed to enable efficient communication for mass distributed NB loT communication devices across wide geographical footprints and deep within urban infrastructure. It's ideal for devices that generate low data traffic, rely on batteries and typically have a long device life cycle. A battery life of more than 10 years can be supported for a wide range of use cases. Moreover, NB loT significantly improves the system capacity and spectrum efficiency, especially in deep coverage. Thus, NB loT can be used to connect simple communication devices, such as sensors, to drive new data streams, reduce operational costs and create new business models. Smart Meters, Smart Bins, environmental monitoring and precision agriculture are just a few applications of NB loT. Such devices are also referred to as NB loT cellular devices. More information about NB loT can be found in the 3GPP technical report TR 45.820.

Although the description is written by using the NB loT as the access technology, the embodiments are applicable also for communication devices that use other wireless communication technologies as well, such as Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and/or 5G system. As used herein, NB loT technology can comprises, for instance, narrowband LTE, narrowband M2M, and narrowband OFDMA techniques.

In embodiments of the present invention communication devices may be capable of communicating content, data, information and/or signals via a wireless medium or channel. In some embodiments, the wireless medium may include, for example, a radio channel, a cellular channel, an RF channel, a WiFi channel, an IR channel, a Bluetooth (BT) channel, a Global Navigation Satellite System (GNSS) channel, and the like.

In embodiments of the present invention communication devices may include one or more radio modules (or short radios) including circuitry and/or logic to perform wireless communication between the communication devices. In embodiments of the present invention the radio modules may include one or more wireless radio receivers (Rx) including circuitry and/or logic to receive wireless communication signals, RF signals, frames, blocks, transmission streams, packets, messages, data items, and/or data. In embodiments of the present invention the radio modules may include one or more wireless radio transmitters (Tx) including circuitry and/or logic to transmit wireless communication signals, RF signals, frames, blocks, transmission streams, packets, messages, data items, and/or data. In embodiments of the present invention, the radio modules may include Radio Frequency (RF) elements, baseband elements, modulation elements, demodulation elements, amplifiers, analog to digital and/or digital to analog converters, filters and the like, which can be implemented in hardware and/or software.

In embodiments of the present invention the radio modules may be configured to communicate according to an OFDM scheme and/or an FDMA scheme in an uplink direction and/or a downlink direction. In other embodiments, the radios of the communication devices may be configured to communicate according to any other additional or alternative modulation scheme. In embodiments of the present invention, the radios may include, or may be associated with, one or more antennas. In one example, a communication device may include a single antenna. In another example, a communication device may include two or more antennas. Such antennas may include any type of antennas suitable for transmitting and/or receiving wireless communication signals, blocks, frames, transmission streams, packets, messages and/or data. The antennas may include, for example, antennas suitable for directional communication, e.g., using beamforming techniques. For example, the antennas may include a phased array antenna, a multiple element antenna, a set of switched beam antennas, and/or the like. In some embodiments, the antennas may implement transmit and receive functionalities using separate transmit and receive antenna elements. In some embodiments, the antennas may implement transmit and receive functionalities using common and/or integrated transmit/receive elements.

In embodiments of the present invention a communication device may include a processor. The processor may be configured to perform and/or to trigger, cause, instruct and/or control the communication device to perform, one or more communications, to generate and/or communicate one or more messages and/or transmissions, and/or to perform one or more functionalities, operations and/or procedures. In embodiments of the present invention the processor control unit may include circuitry and/or logic, Media-Access Control (MAC) circuitry and/or logic, Physical Layer (PHY) circuitry and/or logic, and/or any other circuitry and/or logic, configured to perform the functionality of the processor.

In embodiments of the present invention, at least part of the functionality of the processor may be implemented by an integrated circuit, for example, a chip, e.g., a System on Chip (SoC). In one example, the chip or SoC may be configured to perform one or more functionalities of the radio as well. For example, the chip or SoC may include one or more elements of the processor and/or one or more elements of the radio. In one example, the processor and the radio may be implemented as part of the chip or SoC.

In embodiments of the present invention, the communication device can be a wearable device, a sensor, small device, a mobile device, and/or any other device, which may be, for example, powered by a battery and/or any other power source having a limited capacity.

In embodiments of the present invention, the communication device can be configured to communicate over one or more narrowband channels, for example, channels with a channel bandwidth of about 200 Kilohertz (KHz). In embodiments of the invention a minimum system bandwidth of 200 kHz on both downlink and uplink can be used. In each direction, the 200 kHz channel can be divided into narrow bandwidth subcarriers, for instance, 48 on the downlink and 36 on the uplink. In the downlink direction, Orthogonal Frequency Division Multiple Access (OFDMA) can be used. In the uplink direction Frequency Division Multiple Access (FDMA) can be used.

Thus, according to a first aspect the invention relates to a communication device for communicating data via a first communication network with a second communication network, the communication device comprising: a processor configured to process data comprising a payload section and a first header section; a memory configured to store the data; and a radio transmitter configured to transmit the processed data via the first communication network to neighboring communication devices of the second communication network and/or a base station of the second communication network, wherein the processor is configured to append a second header section to the data in accordance with a tunneling protocol for tunneling the data through the first communication network to the second communication network and to append a cryptographic token to the data to authenticate the payload section of the data, wherein the cryptographic token is independent from the second header section.

Such a communication device improves the coverage of the communication device itself and also the coverage of other communication devices connected to this communication device by establishing a tunneled communication through the first communication network. In particular utilization of heterogeneous networks can be enabled such as wireless/mobile and/or wired/fixed networks, in particular wireless communication networks based on LPWA technology, in particular narrowband loT networks. Hence, the communication device provides a solution which improves the coverage of communication terminals for wireless communication networks, in particular wireless communication networks based on LPWA technology, in particular narrowband IOT networks.

In an implementation form of the communication device, the cryptographic token is configured to authenticate the payload section of the data independently from the tunneling protocol.

This provides the advantage that the receiving terminal can easily authenticate the payload data simply by verifying the cryptographic token without the need to evaluate the tunneling protocol.

In an implementation form of the communication device, the first header section indicates a communication protocol of the communication device, in particular a Narrowband Internet of Things (NB-IoT) communication protocol.

This provides the advantage that such a simplified verification of the payload data in the scenario of NB-loT communication saves processing power and hence increases battery life time of NB-loT communication devices such as sensors, etc.

In an implementation form of the communication device, the cryptographic token is configured to authenticate the payload section of the data independently from the communication protocol of the communication device.

This provides the advantage that the header indicating the communication protocol of the communication device is not required to be evaluated by the receiving terminal, thereby saving processing power and increasing battery lifetime.

In an alternative implementation form of the communication device, the cryptographic token is configured to authenticate the payload section of the data with respect to the tunneling protocol and/or with respect to the communication protocol of the communication device.

This provides the advantage that depending on the actual requirements, either the tunneling protocol or both the tunneling protocol and the communication protocol can be secured by the communication device. I.e. the communication device can implement flexible security solutions.

In an implementation form of the communication device, the processor is configured to append the cryptographic token within a predetermined position of the processed data.

This provides the advantage that the receiving terminal can easily detect the position of the token and hence can efficiently verify the data. Thus, processing power is saved and battery lifetime extended.

In an implementation form of the communication device, the data comprises a plurality of further first header sections indicating a corresponding plurality of communication protocols; and the cryptographic token is configured to authenticate the payload section of the data with respect to the plurality of communication protocols.

This provides the advantage that the communication device can be efficiently applied as a gateway in multi-hop scenarios where a lot of communication protocols have to be implemented, e.g. according to the OSI protocol stack.

In an implementation form of the communication device, the processor is configured to generate the cryptographic token based on an asymmetric cryptographic hash function applied to the payload section or the payload section and any of the first header section or the further first header sections.

This provides the advantage that a hash function for any data can be generated to create a digital fingerprint. It is almost impossible to alter the data in any way without changing the hash function of that data, so this is an efficient method of checking if the data has been changed or corrupted.

In an implementation form of the communication device, the processor is configured to generate a signature based on a private key and to apply the signature to the cryptographic token, wherein the signature is verifiable based on a public key.

This provides the advantage that data can be securely exchanged between communication devices without a secret key being distributed each time. In this system, one key may be distributed openly and used to encrypt data, and the other key may be kept secret and used to decrypt the same data. While the two keys are both mathematically related, and one (the public key) can be distributed to anyone, it will be extremely difficult to determine the secret key from this.

In an implementation form of the communication device, the processor is configured to generate the cryptographic token based on a symmetric cryptographic hash function, in particular a Hash Message Authentication Code (HMAC), applied to the payload section or the payload section and any of the first header section or the further first header sections.

This provides the advantage that data can be efficiently secured for exchange between communication devices. HMAC does not encrypt the message. Instead, the message (encrypted or not) is sent alongside the HMAC hash. Parties with the secret key will hash the message again themselves, and if it is authentic, the received and computed hashes will match.

According to a second aspect, the invention relates to a communication device for communicating data via a first communication network with a second communication network, the communication device comprising: a radio receiver configured to receive data via the first communication network from neighboring communication devices of a second communication network and/or a base station of the second communication network; a memory configured to store the data; and a processor configured to process the data, wherein the data comprises a payload section, a first header section, a second header section indicating a tunneling protocol for tunneling the receive data through the first communication network and a cryptographic token, wherein the processor is configured to verify the cryptographic token independently from the second header section.

Such a communication device improves the coverage of the communication device itself and also the coverage of other communication devices connected to this communication device by establishing a tunneled communication through the first communication network. In particular utilization of heterogeneous networks can be enabled such as wireless/mobile and/or wired/fixed networks, in particular wireless communication networks based on LPWA technology, in particular narrowband loT networks. Hence, the communication device provides a solution which improves the coverage of communication terminals for wireless communication networks, in particular wireless communication networks based on LPWA technology, in particular narrowband IOT networks.

In an implementation form of the communication device, the processor is configured to read the cryptographic token based on a predetermined offset within the received data.

This provides the advantage that the (receiving) communication device can easily detect the position of the token within the received data by checking the predetermined offset and hence can efficiently verify the data. Thus, processing power is saved and battery lifetime extended.

In an implementation form of the communication device, the processor is configured to verify the cryptographic token independently from the tunneling protocol.

This provides the advantage that the (receiving) communication device can easily authenticate the payload data simply by verifying the cryptographic token without the need to evaluate the tunneling protocol.

In an implementation form of the communication device, the first header section indicates a communication protocol of the neighboring communication device, in particular a Narrowband Internet of Things (NB-IoT) communication protocol.

This provides the advantage that such a simplified verification of the payload data in the scenario of NB-loT communication saves processing power and hence increases battery life time of NB-loT communication devices such as sensors, etc.

According to a third aspect, the invention relates to a method for communicating data via a first communication network with a second communication network, the method comprises: processing data comprising a payload section and a first header section, the processing data comprising: appending a second header section to the data in accordance with a tunneling protocol for tunneling the data through the first communication network to the second communication network; and appending a cryptographic token to the data to authenticate the payload section of the data, wherein the cryptographic token is independent from the second header section; and transmitting the processed data via the first communication network to neighboring communication devices of the second communication network and/or a base station of the second communication network.

Such a method improves the coverage of communication by establishing a tunneled communication through the first communication network. In particular utilization of heterogeneous networks can be enabled such as wireless/mobile and/or wired/fixed networks, in particular wireless communication networks based on LPWA technology, in particular narrowband loT networks. Hence, the method provides a solution which improves the coverage of communication terminals for wireless communication networks, in particular wireless communication networks based on LPWA technology, in particular narrowband IOT networks.

According to a fourth aspect the invention relates to a computer program product comprising program code for performing the method according to the third aspect of the invention, when executed on a computer or a processor.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating an exemplary communication system 100 with several communication devices 110a, 110e communicating data via a first communication network 141 with a second communication network 131 according to an embodiment;
Fig. 2 shows a more detailed schematic diagram of a communication device 110a according to an embodiment; and
Fig. 3a shows a schematic diagram illustrating the structure of a message 300a communicated by a communication device 110a via a first communication network 141 with a second communication network 131 according to a first embodiment;
Fig. 3b shows a schematic diagram illustrating the structure of a message 300b communicated by a communication device 110a via a first communication network 141 with a second communication network 131 according to a second embodiment;
Fig. 4 shows a flow diagram illustrating a method 400 for communicating data via a first communication network 141 with a second communication network 131 according to an embodiment.

In the various figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

In the following, devices configured to establish communication through a communication network by installing a communication tunnel through the communication network based on a tunneling protocol are described. A tunneling protocol allows a network user to access or provide a network service that the underlying network does not support or provide directly. An important property of a tunneling protocol is to allow a foreign communication protocol to run over a network that does not support that particular communication protocol. For example establishing a connection using the data link layer may be implemented by using the Layer 2 Tunneling Protocol (L2TP) which allows the transmission of data frames between two nodes. A tunnel is not encrypted by default, it relies on the TCP/IP protocol chosen to determine the level of security. A Secure Shell (SSH) tunnel, for example, consists of an encrypted tunnel created through an SSH protocol connection. Users may set up SSH tunnels to transfer unencrypted traffic over a network through an encrypted channel.

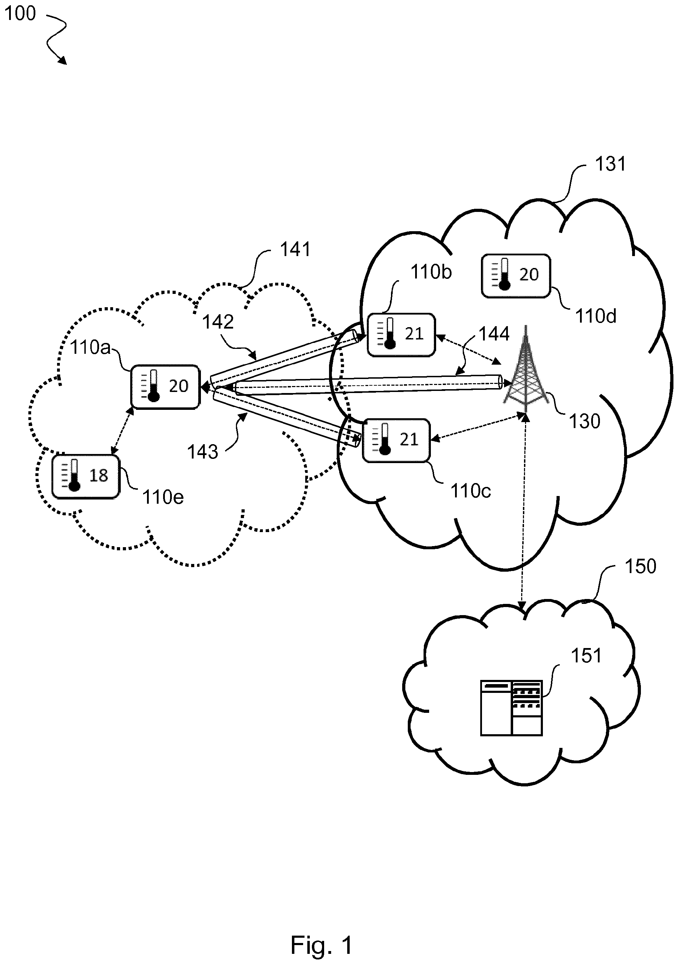

Figure 1 shows a schematic diagram of a communication system 100 according to an embodiment. The communication system 100 comprises a first communication network 141, a second communication network 131 and a third communication network 150. Several communication devices 110a, 110e are within coverage of the first communication network 141 and several other communication devices 110b, 110c, 110d are within coverage of the second communication network 131. The communication devices 110a, 110e are configured to communicate data via the first communication network 141 with the second communication network 131. The first communication network 141 may be a wireless communication network, e.g. a home communication network, for example based on WiFi, Bluetooth or ZigBee communication. The second 131 and third 150 communication networks may be components of a cellular communication network, e.g. a low-power wide-area (LPWA) communication network, in particular a LPWA communication network based on narrowband (NB) loT technology, as described, for instance, in the 3GPP technical report TR 45.820. The second communication network may implement a radio access network component and the third communication network may implement a core network component of the cellular communication network.

In the exemplary embodiment shown in figure 1, the plurality of NB loT communication devices 110a-e may be implemented as smart temperature sensors configured to monitor temperature data and to provide the temperature data via the core network 150 of the NB loT communication network131, 150 to a server configured to collect and analyze the temperature data from the plurality of NB loT communication devices 110a-e.

For the sake of clarity figure 1 shows only a single exemplary base station 130, which is part of the radio access network 131. In other embodiments the radio access network 131 can comprises a plurality of base stations similar to the exemplary base station 130 shown in figure 1.

The core network 150 comprises entities or functions for operating the NB loT communication network131, 150. In the exemplary embodiment, shown in figure 1 the core network 150 comprises an authentication entity 151 configured to perform an authentication procedure with each of the NB loT communication devices 110a-e before granting full access to the NB loT communication network 131, 150.

As illustrated in figure 1, by way of example the NB loT communication devices 110b, 110c and 110d are within the coverage (i.e. "in coverage") of the radio access network 131, whereas the NB loT communication devices 110a and 110e are out of coverage of the radio access network 131 and, therefore, cannot communicate directly with the base station 131. In embodiments of the invention, however, the out-of-coverage NB loT communication devices, e.g. communication devices 110a and 110e are configured to communicate with the base station 130 and/or with the in-coverage NB loT communication devices, e.g. communication devices 110b, 110c and 110d via the first communication network 141, e.g. a home communication network, that is coupled with the second communication network 131.

As illustrated in figure 1, the NB loT communication device 110a is configured to communicate with the NB loT communication network 131, 150 by establishing a tunneled communication channel 142, 143, 144 through the first communication network 141 to the neighboring communication devices 110b, 110c and/or the base station 130 of the NB IoT radio access network 131 using a tunneling protocol.

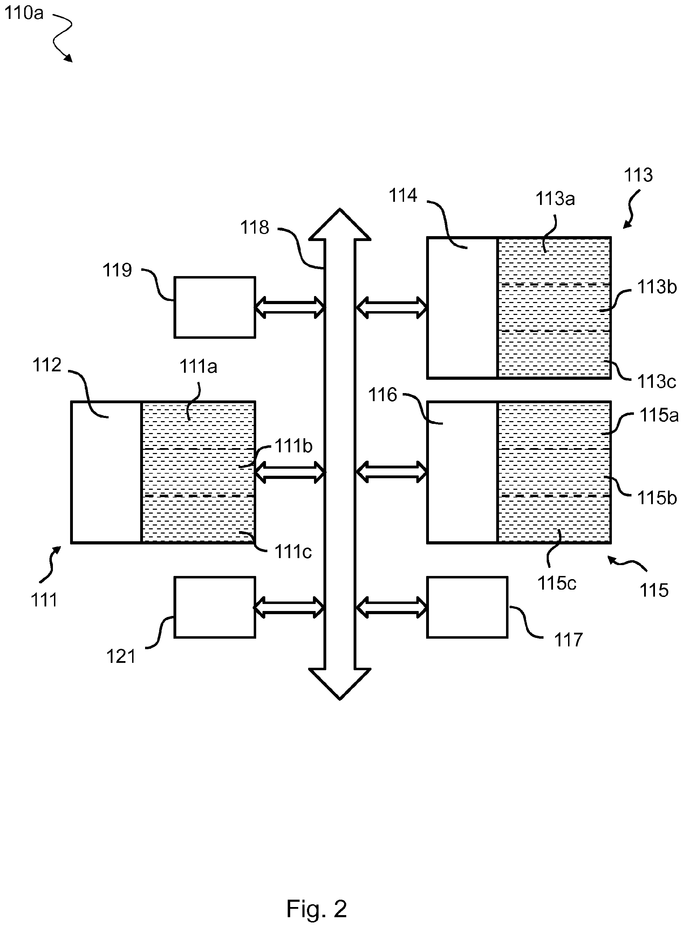

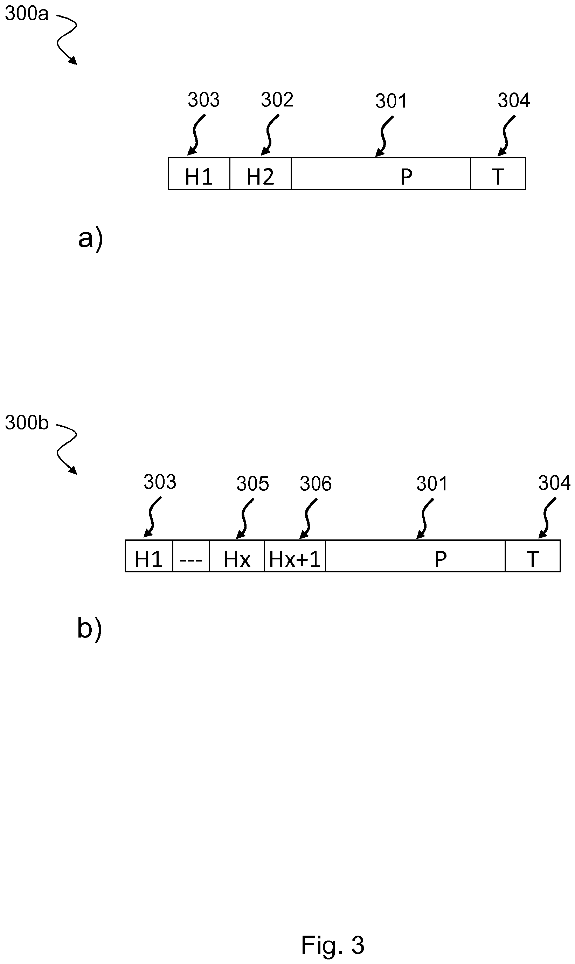

Under reference to figure 2 in the following an embodiment of the NB loT communication device 101a configured as a transmit device to transmit data will be described. The communication device 110a is configured to communicate data via a first communication network 141 with a second communication network 131. The communication device 110a includes a processor 111, a memory 113, 115 and a radio transmitter 117. The processor 111 is configured to process data, e.g. data 300a, 300b described below with respect to Figures 3a and 3b, comprising a payload section 301 and a first header section 302. The memory 113, 115 is configured to store the data 300a, 300b. The radio transmitter 117 is configured to transmit the processed data via the first communication network 141 to neighboring communication devices, e.g. devices 110b, 110c shown in Fig. 1 of the second communication network 131 and/or a base station 130 of the second communication network 131.

The processor 111 is configured to append a second header section 303 to the data 300a, 300b in accordance with a tunneling protocol 142, 143, 144 for tunneling the data 300a, 300b through the first communication network 141 to the second communication network 131 and to append a cryptographic token 304 to the data 300a, 300b to authenticate the payload section 301 of the data. The cryptographic token 304 is independent from the second header section 303, i.e. independent from the tunneling protocol 142, 143, 144.

The cryptographic token 304 may be configured to authenticate the payload section 301 of the data 300a, 300b independently from the tunneling protocol 142, 143, 144. The first header section 302 may indicate a communication protocol of the communication device 110a, e.g. a Narrowband Internet of Things (NB-IoT) communication protocol. The cryptographic token 304 may be configured to authenticate the payload section 301 of the data 300a, 300b independently from the communication protocol of the communication device 110a. For example, the cryptographic token 304 may be configured to authenticate the payload section 301 of the data 300a, 300b with respect to the tunneling protocol 142, 143, 144 and/or with respect to the communication protocol of the communication device 110a.

In one implementation, the processor 111 is configured to append the cryptographic token 304 within a predetermined position of the processed data, e.g. with a known offset from the end of the data to the beginning of the token 304.

In an exemplary implementation form, the data 300b comprises a plurality of further first header sections 305, 306 indicating a corresponding plurality of communication protocols, e.g. as shown in Fig. 3b. The cryptographic token 304 may be configured to authenticate the payload section 301 of the data 300b with respect to the plurality of communication protocols.

The processor 111 may be configured to generate the cryptographic token 304 based on an asymmetric cryptographic hash function applied to the payload section 301 or the payload section 301 and any of the first header section 302 or the further first header sections 305, 306 as shown in Figures 3a and 3b. The processor 111 may be configured to generate a signature based on a private key and to apply the signature to the cryptographic token 304. The signature may be verifiable based on a public key.

In an exemplary implementation form, the processor 111 may be configured to generate the cryptographic token 304 based on a symmetric cryptographic hash function, in particular a Hash Message Authentication Code (HMAC), applied to the payload section 301 or the payload section 301 and any of the first header section 302 or the further first header sections 305, 306 as shown in Figures 3a and 3b.

Under reference to figure 2 in the following an embodiment of the NB loT communication device 101a configured as a receive device to receive data will be described. The communication device 110a is configured to communicate data via a first communication network 141 with a second communication network 131. The communication device 110a includes a radio receiver 117, a memory 113, 115 and a processor 111.

The radio receiver 117 is configured to receive data, e.g. data 300a, 300b as shown in Figures 3a and 3b, via the first communication network 141 from neighboring communication devices 110b, 110c of a second communication network 131 and/or a base station 130 of the second communication network 131, e.g. as described above with respect to Fig. 1. The memory 113, 115 is configured to store the data 300a, 300b.

The processor 111 is configured to process the data 300a, 300b. The data 300a, 300b comprises a payload section 301, a first header section 302, a second header section 303 indicating a tunneling protocol 142, 143, 144 for tunneling the receive data 300a, 300b through the first communication network 141 and a cryptographic token 304, e.g. as described below with respect to Figures 3a and 3b. The processor 111 is configured to verify the cryptographic token 304 independently from the second header section 303.

In one exemplary implementation form, the processor 111 may be configured to read the cryptographic token 304 based on a predetermined offset within the received data 300a, 300b, e.g. with a known offset from the end of the data to the beginning of the token 304. For example, the processor 111 may be configured to verify the cryptographic token 304 independently from the tunneling protocol 142, 143, 144. The first header section 302 may indicate a communication protocol of the neighboring communication device 110b, 110c, e.g. a Narrowband Internet of Things (NB-IoT) communication protocol.

Under further reference to figure 2 in the following a further embodiment of the NB loT communication device 101a will be described. The communication device 110a comprises a processor 111 configured to process data and running applications providing one or more security functions, a memory comprising a RAM 113 and a Flash memory 115 configured to store volatile and non-volatile data (in particular executable application code), respectively, and a radio 117 configured to transmit and/or receive data over the NB loT communication network 100. In an embodiment, the radio 117 can be configured to use one or more subcarriers of a channel bandwidth of about 200 Kilohertz (KHz) to communicate with the base station on the basis of an OFDMA scheme in the downlink direction and on the basis of a FDMA scheme in the uplink direction. Alternatively to or in addition to the Flash memory 115 the communication device 110a can comprise a ROM as well.

In an embodiment, the processor 111, the ROM 113, the Flash memory 115 and/or the radio 117 can be implemented as a system on a chip. As illustrated in figure 2, in an embodiment the communication device 110a further comprises a communication bus system 118 configured to provide for the flow of data between the processor 111, the ROM 113, the Flash memory 115 and the radio 117.

In an embodiment, the communication device 110a further comprises a sensor 119 configured to collect data, wherein the security system of the communication device 110a is further configured to restrict access to the sensor 119 to one or more selected sets of the three sets of security domains 111a-c, 113a-c, 115a-c. For example, the security system can be configured to restrict access to the sensor 119 to the first set of security domains 111a, 113a, 115a and/or the second set of security domains 111b, 113b, 115b.

In addition or alternatively, in an embodiment the communication device 110a further comprises an actuator 121, wherein the security system of the communication device is further configured to restrict access to the actuator 121 to one or more selected sets of the three sets of security domains 111a-c, 113a-c, 115a-c. For example, the security system can be configured to restrict access to the actuator 121 to the first set of security domains 111a, 113a, 115a and/or the third set of security domains 111c, 113c, 115c.

The communication device 110a further comprises a security system configured to operate one or more sets of logically separated security domains 111a-c, 113a-c, 115a-c on the processor 111, the volatile RAM 113 and the non-volatile Flash memory 115. By way of example, in the embodiment shown in figure 2 the security system of the communication device 110a may operate three different sets of security domains, namely a first set of security domains, comprising a processor security domain 111a, a RAM security domain 113a and a Flash memory security domain 115a, a second set of security domains, comprising a processor security domain 111b, a RAM security domain 113b and a Flash memory security domain 115b, and a third set of security domains, comprising a processor security domain 111c, a RAM security domain 113c and a Flash memory security domain 115c.

The respective security domains of a set of security domains, for instance, the processor security domain 111a, the RAM security domain 113a and the Flash memory security domain 115a of the first set of security domains may be logically separated from the security domains of other sets of security domains and may be configured to interact with each other to provide at least one respective security function.

In the embodiment shown in figure 2 the processor security domain 111a, the RAM security domain 113a and the Flash memory security domain 115a of the first set of security domains may be configured to interact with each other for authenticating the communication device 110a with the authentication entity 151 of the core network 150 of the NB loT communication network 100 and, thus, provide the communication device 110a with a (i)UICC function. In one exemplary implementation, the processor security domain 111a, the RAM security domain 113a and the Flash memory security domain 115a of the first set of security domains may be configured to interact with each other for installing the tunneled communication links through the first communication network 141. The processor security domain 111a, the RAM security domain 113a and the Flash memory security domain 115a of the first set of security domains may be further configured to interact with each other for processing the data 300a, 300b as described below with respect to Figures 3a and 3b, e.g. generating the header sections 302, 303, 305, 306 and the cryptographic token 304.

The security system of the communication device 110 shown in figure 2 may be further configured to restrict access to the radio 117 to one or more selected sets of the one or more sets of security domains. For example, the security system may be configured to restrict access to the radio 117 to the first set of security domains only, i.e. only the processor security domain 111a of the first set of security domains can access the radio 117 and interact therewith, for instance, for transmitting sensor data collected by a sensor 119 over the NB loT communication network 100. In another embodiment, the security system of the communication device 110 shown in figure 2 can be configured to allow the first and the second set of security domains access to the radio 117, but not the third set of security domains.

The security system of the communication device 110a shown in figure 2 can be implemented in hardware and/or software. In an embodiment, the security system can be implemented using virtualization techniques. In an embodiment, the different RAM security domains 113a-c can be provided by different partitions of the RAM 113. In an embodiment, the data in the different RAM security domains 113a-c are accessible using "memory mapped I/O".

In one implementation form of the communication device 110a, for providing the (i)UICC security function the Flash memory security domain 115a of the first set of security domains can store the cryptographic token 304 for authenticating the data 300a, 300b.

Fig. 3a shows a schematic diagram illustrating the structure of a message 300a communicated by a communication device 110a via a first communication network 141 with a second communication network 131 according to a first embodiment.

The message 300a includes payload data P, 301, a first header section H2, 302, e.g. indicating a communication protocol of a communication device generating the payload data 301, a second header section H1, 303, e.g. indicating a tunneling protocol for tunneling the message 300a and a cryptographic token T, 304 for authenticating the transmission of message 300a. H1, 303 describes the header of the tunneling protocol, for example WiFi, LoRaWAN, etc. H2, 302 may for example be implemented as an NB-loT header.

The tunneling protocol may be a tunneling protocol 142, 143, 144 as described above with respect to Fig. 1 for installing a communication tunnel through the first communication network 141 between a communication device 110a and a neighboring communication device 110b, 110c or a base station 130 of the second communication network 131.

The cryptographic token T, 304 enables authorization of the data independent of the protocol stack used and the tunnel protocol used. It is possible for T to authenticate both the payload data P, 301 for forwarding with the tunnel protocol H1, 303 as well as with the actual protocol H2, 302.

Gateways and/or implementations of the protocol stack may be implemented in such a manner that the offset from the end of the entire message to the beginning of the data block T, 304 is known, for example a 16 byte (HMAC) offset. Thereby, a verification of the authentication can be implemented very efficiently without the headers from the other protocols, e.g. H2, 302.

The method can be performed on different protocol layers and with different protocol headers. Of course, interleaving with three or more headers is feasible, e.g. as shown below with respect to Fig. 3b.

Fig. 3b shows a schematic diagram illustrating the structure of a message 300b communicated by a communication device 110a via a first communication network 141 with a second communication network 131 according to a second embodiment;

The message 300b includes payload data P, 301, multiple further first header sections Hx, 305, Hx+1, 306, etc., e.g. indicating one or more communication protocols of a communication device generating the payload data 301, a second header section H1, 303, e.g. indicating a tunneling protocol for tunneling the message 300b and a cryptographic token T, 304 for authenticating the message 300b. The tunneling protocol may be a tunneling protocol 142, 143, 144 as described above with respect to Fig. 1 for installing a communication tunnel through the first communication network 141 between a communication device 110a and a neighboring communication device 110b, 110c or a base station 130 of the second communication network 131.

In the following, two different implementation variants for generating and verifying the cryptographic token 304 are described.

In a first implementation variant, the token T, 304 can be encrypted with an asymmetric cryptographic method, i.e. implemented with a signed hash value. The hash value can be calculated via the payload 301 and possibly also the header Hx + 1, 306 (but not the tunnel protocol header Hx, 305) and then signed. A signature may be generated with a private key in the loT terminal, e.g. communication device 110a and can then be verified via a public (root) key in the various gateways, e.g. the neighboring communication devices 110b, 110c shown in Fig. 1 receiving the data. The advantage of these procedures is that the public key is not subject to any secrecy.

In a second implementation variant, the token T, 304 can be implemented with a symmetric cryptographic method e.g. an HMAC. The HMAC can be calculated using the symmetric key over the payload P, 301 and possibly also the header Hx + 1, 306 (but not the tunnel protocol header Hx, 305). For a check in the gateway, e.g. the neighboring communication device 110b, 110c shown in Fig. 1 receiving the data, the symmetrical key should be secured in the gateway and protected there before readout.

For example, a security protocol, e.g. TLS / SLL / IPSec may be combined with a tunnel protocol, e.g. L2TP. The cryptographic token 304 may be configured to secure the payload data 301 and/or the headers H1... Hx + 1. For example, header Hx can be a header of the selected tunnel protocol. The security mechanism as described above allows to perform the security check by evaluating only the information from the token 304 without the need to check or interpret the information from the headers H1 ... Hx + 1. Hence, a very efficient and fast security check can take place.

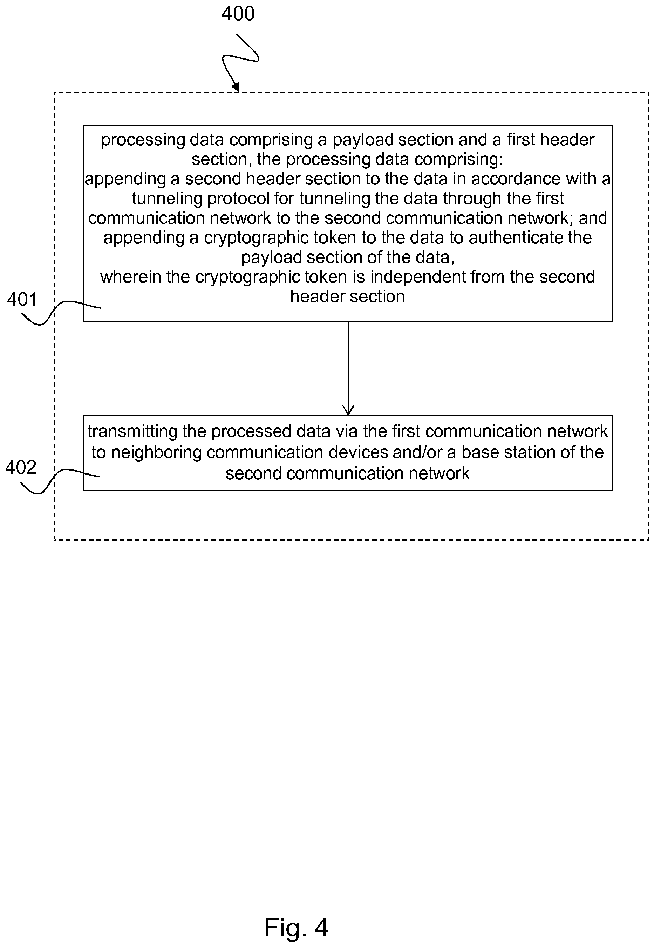

Figure 4 shows a diagram illustrating a corresponding method 400 for communicating data, e.g. data 300a, 300b as described above with respect to Figures 3a/b via a first communication network with a second communication network, e.g. a first communication network 141 and a second communication network 131 as described above with respect to Figure 1.

The method 400 includes: processing 401 data 300a, 300b comprising a payload section 301 and a first header section 302. The processing 401 data includes: appending a second header section 303 to the data 300a, 300b in accordance with a tunneling protocol 142, 143, 144 for tunneling the data 300a, 300b through the first communication network 141 to the second communication network 131, e.g. as described above with respect to Figures 1 to 3. The processing 401 data further includes: appending a cryptographic token 304 to the data 300a, 300b to authenticate the payload section 301 of the data 300a, 300b, e.g. as described above with respect to Figures 1 to 3. The cryptographic token 304 is independent from the second header section 303.

The method 400 further includes: transmitting 402 the processed data via the first communication network 141 to neighboring communication devices 110b, 110c of the second communication network 131 and/or a base station 130 of the second communication network 131, e.g. as described above with respect to Figures 1 to 3.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A communication device (110a) for communicating data via a first communication network (141) with a second communication network (131), the communication device (110a) comprising:
a processor (111) configured to process data (300a, 300b) comprising a payload section (301) and a first header section (302);
a memory (113, 115) configured to store the data (300a, 300b); and
a radio transmitter (117) configured to transmit the processed data via the first communication network (141) to neighboring communication devices (110b, 110c) of the second communication network (131) and/or a base station (130) of the second communication network (131);
wherein the processor (111) is configured to append a second header section (303) to the data (300a, 300b) in accordance with a tunneling protocol (142, 143, 144) for tunneling the data (300a, 300b) through the first communication network (141) to the second communication network (131) and to append a cryptographic token (304) to the data (300a, 300b) with a known offset from the end of the data (300a, 300b) to the beginning of the cryptographic token (304) to authenticate the payload section (301) of the data, wherein the cryptographic token (304) is independent from the second header section (303).

2. The communication device (110a) of claim 1,
wherein the cryptographic token (304) is configured to authenticate the payload section (301) of the data (300a, 300b) independently from the tunneling protocol (142, 143, 144).

3. The communication device (110a) of claim 1 or 2,
wherein the first header section (302) indicates a communication protocol of the communication device (110a), in particular a Narrowband Internet of Things (NB-IoT) communication protocol.

4. The communication device (110a) of claim 3,
wherein the cryptographic token (304) is configured to authenticate the payload section (301) of the data (300a, 300b) independently from the communication protocol of the communication device (110a).

5. The communication device (110a) of claim 4,
wherein the cryptographic token (304) is configured to authenticate the payload section (301) of the data (300a, 300b) with respect to the tunneling protocol (142, 143, 144) and/or with respect to the communication protocol of the communication device (110a).

6. The communication device (110a) of one of the preceding claims,
wherein the data (300b) comprises a plurality of further first header sections (305, 306) indicating a corresponding plurality of communication protocols; and
wherein the cryptographic token (304) is configured to authenticate the payload section (301) of the data (300b) with respect to the plurality of communication protocols.

7. The communication device (110a) of claim6,
wherein the processor (111) is configured to generate the cryptographic token (304) based on an asymmetric cryptographic hash function applied to the payload section (301) or the payload section (301) and any of the first header section (302) or the further first header sections (305, 306).

8. The communication device (110a) of claim 7,
wherein the processor (111) is configured to generate a signature based on a private key and to apply the signature to the cryptographic token (304), wherein the signature is verifiable based on a public key.

9. The communication device (110a) of claim 6,
wherein the processor (111) is configured to generate the cryptographic token (304) based on a symmetric cryptographic hash function, in particular a Hash Message Authentication Code (HMAC), applied to the payload section (301) or the payload section (301) and any of the first header section (302) or the further first header sections (305, 306).

10. A communication device (110a) for communicating data via a first communication network (141) with a second communication network (131), the communication device (110a) comprising:
a radio receiver (117) configured to receive data (300a, 300b) via the first communication network (141) from neighboring communication devices (110b, 110c) of a second communication network (131) and/or a base station (130) of the second communication network (131);
a memory (113, 115) configured to store the data (300a, 300b); and
a processor (111) configured to process the data (300a, 300b), wherein the data (300a, 300b) comprises a payload section (301), a first header section (302), a second header section (303) indicating a tunneling protocol (142, 143, 144) for tunneling the receive data (300a, 300b) through the first communication network (141) and a cryptographic token (304),
wherein the processor (111) is configured to read the cryptographic token (304) with a known offset from the end of the data (300a, 300b) to the beginning of the cryptographic token (304) and to verify the cryptographic token (304) independently from the second header section (303).

11. The communication device (110a) of claim 10,
wherein the processor (111) is configured to read the cryptographic token (304) based on a predetermined offset within the received data (300a, 300b).

12. The communication device (110a) of claim 10 or 11,
wherein the processor (111) is configured to verify the cryptographic token (304) independently from the tunneling protocol (142, 143, 144).

13. The communication device (110a) of one of claims 10 to 12,
wherein the first header section (302) indicates a communication protocol of the neighboring communication device (110b, 110c), in particular a Narrowband Internet of Things (NB-loT) communication protocol.

14. A method (400) for communicating data (300a, 300b) via a first communication network (141) with a second communication network (131), the method (400) comprising:
processing (401) data (300a, 300b) comprising a payload section (301) and a first header section (302), the processing (401) data comprising:
appending a second header section (303) to the data (300a, 300b) in accordance with a tunneling protocol (142, 143, 144) for tunneling the data (300a, 300b) through the first communication network (141) to the second communication network (131); and
appending a cryptographic token (304) to the data (300a, 300b) with a known offset from the end of the data (300a, 300b) to the beginning of the cryptographic token (304) to authenticate the payload section (301) of the data (300a, 300b),
wherein the cryptographic token (304) is independent from the second header section (303); and
transmitting (402) the processed data via the first communication network (141) to neighboring communication devices (110b, 110c) of the second communication network (131) and/or a base station (130) of the second communication network (131).

## Patentansprüche

1. Kommunikationsvorrichtung (110a) zur Kommunikation von Daten über ein erstes Kommunikationsnetzwerk (141) mit einem zweiten Kommunikationsnetzwerk (131), wobei die Kommunikationsvorrichtung (110a) umfasst:
einen Prozessor (111), der konfiguriert ist, Daten (300a, 300b) zu verarbeiten, die einen Nutzdatenabschnitt (301) und einen ersten Headerabschnitt (302) umfassen;
einen Speicher (113, 115), der zum Speichern der Daten (300a, 300b) konfiguriert ist; und
einen Funksender (117), der konfiguriert ist, die verarbeiteten Daten über das erste Kommunikationsnetzwerk (141) an benachbarte Kommunikationsvorrichtungen (110b, 110c) des zweiten Kommunikationsnetzwerks (131) und/oder eine Basisstation (130) des zweiten Kommunikationsnetzwerks (131) zu senden;
wobei der Prozessor (111) konfiguriert ist, einen zweiten Headerabschnitt (303) an die Daten (300a, 300b) anzuhängen gemäß einem Tunnelprotokoll (142, 143, 144) zum Tunneln der Daten (300a, 300b) durch das erste Kommunikationsnetzwerk (141) an das zweite Kommunikationsnetzwerk (131) und ein kryptografischen Token (304) an die Daten (300a, 300b) anzuhängen mit einem bekannten Offset vom Ende der Daten (300a, 300b) bis zum Anfang des kryptografisches Tokens (304) zum Authentifizieren des Nutzdatenabschnitts (301) der Daten, wobei das kryptografische Token (304) von dem zweiten Headerabschnitt (303) unabhängig ist.

2. Kommunikationsvorrichtung (110a) nach Anspruch 1,
wobei das kryptografische Token (304) konfiguriert ist, den Nutzdatenabschnitt (301) der Daten (300a, 300b) unabhängig von dem Tunnelprotokoll (142, 143, 144) zu authentifizieren.

3. Kommunikationsvorrichtung (110a) nach Anspruch 1 oder 2,
wobei der erste Headerabschnitt (302) ein Kommunikationsprotokoll der Kommunikationsvorrichtung (110a), insbesondere ein schmalbandiges Internet-der-Dinge-(NB-IoT) Kommunikationsprotokoll, angibt.

4. Kommunikationsvorrichtung (110a) nach Anspruch 3,
wobei das kryptografische Token (304) konfiguriert ist, den Nutzdatenabschnitt (301) der Daten (300a, 300b) unabhängig von dem Kommunikationsprotokoll der Kommunikationsvorrichtung (110a) zu authentifizieren.

5. Kommunikationsvorrichtung (110a) nach Anspruch 4,
wobei das kryptografische Token (304) konfiguriert ist, den Nutzdatenabschnitt (301) der Daten (300a, 300b) in Bezug auf das Tunnelprotokoll (142, 143, 144) und/oder in Bezug auf das Kommunikationsprotokoll der Kommunikationsvorrichtung (110a) zu authentifizieren.

6. Kommunikationsvorrichtung (110a) nach einem der vorhergehenden Ansprüche,
wobei die Daten (300b) mehrere weitere erste Headerabschnitte (305, 306), die eine entsprechende Vielzahl von Kommunikationsprotokollen angeben, umfassen; und
wobei das kryptografische Token (304) konfiguriert ist, den Nutzdatenabschnitt (301) der Daten (300b) in Bezug auf die Vielzahl von Kommunikationsprotokollen zu authentifizieren.

7. Kommunikationsvorrichtung (110a) nach Anspruch 6,
wobei der Prozessor (111) konfiguriert ist, das kryptografische Token (304) basierend auf einer asymmetrischen kryptografischen Hashfunktion zu erzeugen, die auf den Nutzdatenabschnitt (301) oder auf den Nutzdatenabschnitt (301) und einen von dem ersten Headerabschnitt (302) oder dem weiteren ersten Headerabschnitten (305, 306) angewendet wird.

8. Kommunikationsvorrichtung (110a) nach Anspruch 7,
wobei der Prozessor (111) konfiguriert ist, eine Signatur basierend auf einem privaten Schlüssel zu erzeugen und die Signatur auf das kryptografische Token (304) anzuwenden, wobei die Signatur basierend auf einem öffentlichen Schlüssel verifizierbar ist.

9. Kommunikationsvorrichtung (110a) nach Anspruch 6,
wobei der Prozessor (111) konfiguriert ist, das kryptografische Token (304) basierend auf einer symmetrischen kryptografischen Hashfunktion, insbesondere einem Hash-Nachrichten-Authentifizierungscode (HMAC), zu erzeugen, der auf den Nutzdatenabschnitt (301) oder auf den Nutzdatenabschnitt (301) und einen von dem ersten Headerabschnitt (302) oder dem weiteren ersten Headerabschnitten (305, 306) angewendet wird.

10. Kommunikationsvorrichtung (110a) zur Kommunikation von Daten über ein erstes Kommunikationsnetzwerk (141) mit einem zweiten Kommunikationsnetzwerk (131), wobei die Kommunikationsvorrichtung (110a) umfasst:
einen Funkempfänger (117), der konfiguriert ist, Daten (300a, 300b) über das erste Kommunikationsnetzwerk (141) von benachbarten Kommunikationsvorrichtungen (110b, 110c) eines zweiten Kommunikationsnetzwerks (131) und/oder einer Basisstation (130) des zweiten Kommunikationsnetzwerks (131) zu empfangen;
einen Speicher (113, 115), der zum Speichern der Daten (300a, 300b) konfiguriert ist; und
einen Prozessor (111), der konfiguriert ist, die Daten (300a, 300b) zu verarbeiten, wobei die Daten (300a, 300b) einen Nutzdatenabschnitt (301), einen ersten Headerabschnitt (302), einen zweiten Headerabschnitt (303), der ein Tunnelprotokoll (142, 143, 144) zum Tunneln der Empfangsdaten (300a, 300b) durch das erste Kommunikationsnetzwerk (141) angibt, und ein kryptografisches Token (304) umfassen;
wobei der Prozessor (111) konfiguriert ist, das kryptografische Token (304) mit einem bekannten Offset vom Ende der Daten (300a, 300b) bis zum Beginn des kryptografischen Tokens (304) zu lesen und das kryptografische Token (304) unabhängig von dem zweiten Headerabschnitt (303) zu verifizieren.

11. Kommunikationsvorrichtung (110a) nach Anspruch 10,
wobei der Prozessor (111) konfiguriert ist, das kryptografische Token (304) basierend auf einem vorbestimmten Offset innerhalb der empfangenen Daten (300a, 300b) zu lesen.

12. Kommunikationsvorrichtung (110a) nach Anspruch 10 oder 11,
wobei der Prozessor (111) konfiguriert ist, das kryptografische Token (304) unabhängig von dem Tunnelprotokoll (142, 143, 144) zu verifizieren.

13. Kommunikationsvorrichtung (110a) nach einem der Ansprüche 10 bis 12,
wobei der erste Headerabschnitt (302) ein Kommunikationsprotokoll der benachbarten Kommunikationsvorrichtung (110b, 110c), insbesondere ein schmalbandiges Internet-der-Dinge- (NB-IoT) Kommunikationsprotokoll, angibt.

14. Verfahren (400) zur Kommunikation von Daten (300a, 300b) über ein erstes Kommunikationsnetzwerk (141) mit einem zweiten Kommunikationsnetzwerk (131), wobei das Verfahren (400) umfasst:
Verarbeiten (401) von Daten (300a, 300b), die einen Nutzdatenabschnitt (301) und einen ersten Headerabschnitt (302) umfassen, wobei das Verarbeiten der Daten (401) umfasst:
Anhängen eines zweiten Headerabschnitts (303) an die Daten (300a, 300b) gemäß einem Tunnelprotokoll (142, 143, 144) zum Tunneln der Daten (300a, 300b) durch das erste Kommunikationsnetzwerk (141) zu dem zweiten Kommunikationsnetzwerk (131); und
Anhängen eines kryptografischen Tokens (304) an die Daten (300a, 300b) mit einem bekannten Offset vom Ende der Daten (300a, 300b) bis zum Anfang des kryptografischen Tokens (304), um den Nutzdatenabschnitt (301) der Daten (300a, 300b) zu authentifizieren,
wobei das kryptografische Token (304) unabhängig von dem zweiten Headerabschnitt (303) ist; und
Senden (402) der verarbeiteten Daten über das erste Kommunikationsnetzwerk (141) an benachbarte Kommunikationsvorrichtungen (110b, 110c) des zweiten Kommunikationsnetzwerks (131) und/oder eine Basisstation (130) des zweiten Kommunikationsnetzwerks (131).

## Revendications

1. Dispositif de communication (110a) pour communiquer des données via un premier réseau de communication (141) avec un deuxième réseau de communication (131), le dispositif de communication (110a) comprenant :
un processeur (111) configuré pour traiter des données (300a, 300b) comprenant une section de charge utile (301) et une première section d'en-tête (302) ;
une mémoire (113, 115) configurée pour stocker les données (300a, 300b) ; et
un émetteur radio (117) configuré pour transmettre les données traitées via le premier réseau de communication (141) aux dispositifs de communication voisins (110b, 110c) du deuxième réseau de communication (131) et/ou à une station de base (130) du deuxième réseau de communication (131) ;
dans lequel le processeur (111) est configuré pour annexer une deuxième section d'en-tête (303) aux données (300a, 300b) en fonction d'un protocole de tunnellisation (142, 143, 144) pour la tunnellisation des données (300a, 300b) à travers le premier réseau de communication (141) au deuxième réseau de communication (131) et pour annexer un jeton cryptographique (304) aux données (300a, 300b) avec un décalage connu depuis la fin des données (300a, 300b) jusqu'au début du jeton cryptographique (304) pour authentifier la section de charge utile (301) des données, dans lequel le jeton cryptographique (304) est indépendant de la deuxième section d'en-tête (303).

2. Dispositif de communication (110a) selon la revendication 1,
dans lequel le jeton cryptographique (304) est configuré pour authentifier la section de charge utile (301) des données (300a, 300b) indépendamment du protocole de tunnellisation (142, 143, 144).

3. Dispositif de communication (110a) selon la revendication 1 ou 2,
dans lequel la première section d'en-tête (302) indique un protocole de communication du dispositif de communication (110a), en particulier un protocole de communication d'Internet de choses à bande étroite (NB-IoT).

4. Dispositif de communication (110a) selon la revendication 3,
dans lequel le jeton cryptographique (304) est configuré pour authentifier la section de charge utile (301) des données (300a, 300b) indépendamment du protocole de communication du dispositif de communication (110a).

5. Dispositif de communication (110a) selon la revendication 4,
dans lequel le jeton cryptographique (304) est configuré pour authentifier la section de charge utile (301) des données (300a, 300b) par rapport au protocole de tunnellisation (142, 143, 144) et/ou par rapport au protocole de tunnellisation du dispositif de communication (110a).

6. Dispositif de communication (110a) selon l'une des revendications précédentes,
dans lequel les données (300b) comprennent une pluralité d'autres premières sections d'en-tête (305, 306) indiquant une pluralité correspondante de protocoles de communication ; et
dans lequel le jeton cryptographique (304) est configuré pour authentifier la section de charge utile (301) des données (300b) par rapport à la pluralité de protocoles de communication.

7. Dispositif de communication (110a) selon la revendication 6,
dans lequel le processeur (111) est configuré pour générer le jeton cryptographique (304) sur la base d'une fonction de hachage cryptographique asymétrique appliquée à la section de charge utile (301) ou à la section de charge utile (301) et à l'une quelconque de la première section d'en-tête (302) ou des autres premières sections d'en-tête (305, 306).

8. Dispositif de communication (110a) selon la revendication 7,
dans lequel le processeur (111) est configuré pour générer une signature sur la base d'une clé privée et pour appliquer la signature au jeton cryptographique (304), dans lequel la signature est vérifiable sur la base d'une clé publique.

9. Dispositif de communication (110a) selon la revendication 6,
dans lequel le processeur (111) est configuré pour générer le jeton cryptographique (304) sur la base d'une fonction de hachage cryptographique symétrique, en particulier un code d'authentification de message de hachage (HMAC), appliquée à la section de charge utile (301) ou à la section de charge utile (301) et l'une quelconque de la première section d'en-tête (302) ou des autres premières sections d'en-tête (305, 306).

10. Dispositif de communication (110a) pour communiquer des données via un premier réseau de communication (141) avec un deuxième réseau de communication (131), le dispositif de communication (110a) comprenant :
un récepteur radio (117) configuré pour recevoir des données (300a, 300b) via le premier réseau de communication (141) depuis des dispositifs de communication voisins (110b, 110c) d'un deuxième réseau de communication (131) et/ou d'une station de base (130) du deuxième réseau de communication (131) ;
une mémoire (113, 115) configurée pour stocker les données (300a, 300b) ; et
un processeur (111) configuré pour traiter les données (300a, 300b), dans lequel les données (300a, 300b) comprennent une section de charge utile (301), une première section d'en-tête (302), une deuxième section d'en-tête (303) indiquant un protocole de tunnellisation (142, 143, 144) pour la tunnellisation des données reçues (300a, 300b) à travers le premier réseau de communication (141) et un jeton cryptographique (304),
dans lequel le processeur (111) est configuré pour lire le jeton cryptographique (304) avec un décalage connu depuis la fin des données (300a, 300b) jusqu'au début du jeton cryptographique (304) et pour vérifier le jeton cryptographique (304) indépendamment de la deuxième section d'en-tête (303).

11. Dispositif de communication (110a) selon la revendication 10,
dans lequel le processeur (111) est configuré pour lire le jeton cryptographique (304) sur la base d'un décalage prédéterminé à l'intérieur des données reçues (300a, 300b).

12. Dispositif de communication (110a) selon la revendication 10 ou 11,
dans lequel le processeur (111) est configuré pour vérifier le jeton cryptographique (304) indépendamment du protocole de tunnellisation (142, 143, 144).

13. Dispositif de communication (110a) selon l'une des revendications 10 à 12,
dans lequel la première section d'en-tête (302) indique un protocole de communication du dispositif de communication voisin (110b, 110c), en particulier un protocole de communication d'Internet de choses à bande étroite (NB-IoT).

14. Procédé (400) pour communiquer des données (300a, 300b) via un premier réseau de communication (141) avec un deuxième réseau de communication (131), le procédé (400) comprenant :
le traitement (401) de données (300a, 300b) comprenant une section de charge utile (301) et une première section d'en-tête (302), le traitement (401) de données comprenant :
l'annexion d'une deuxième section d'en-tête (303) aux données (300a, 300b) en fonction d'un protocole de tunnellisation (142, 143, 144) pour la tunnellisation des données (300a, 300b) à travers le premier réseau de communication (141) au deuxième réseau de communication (131) ; et
l'annexion d'un jeton cryptographique (304) aux données (300a, 300b) avec un décalage connu depuis la fin des données (300a, 300b) jusqu'au début du jeton cryptographique (304) pour authentifier la section de charge utile (301) des données (300a, 300b),
dans lequel le jeton cryptographique (304) est indépendant de la deuxième section d'en-tête (303) ; et
la transmission (402) des données traitées via le premier réseau de communication (141) aux dispositifs de communication voisins (110b, 110c) du deuxième réseau de communication (131) et/ou à une station de base (130) du deuxième réseau de communication (131).
